# EUROPÄISCHE PATENTANMELDUNG

(11) **EP 2 446 791 A2**
(43) Veröffentlichungstag der Anmeldung: **02.05.2012**
(21) Anmeldenummer: 12152297.3
(22) Anmeldetag: 13.01.2005
(51) Int. Cl.: A47J 31/40, A47J 31/36

(54) **Kaffeemaschine zum Aufbrühen von in einer Kapsel abgepacktem Pulverkaffee**

(30) Priorität: 14.01.2004 DE 102004002004
(62) Teilanmeldung aus: 05000600.6
(71) Anmelder: Saeco International Group S.P.A., 40041 Gaggio Montana (IT); Caffita System S.p.A., 40041 Gaggio Montano BO (IT)
(72) Erfinder: Remo, Gianni, 40041 Gaggio Montano (IT); Schmed, Arthur, 40041 Gaggio Montano (IT)
(74) Vertreter: Coops, Peter

(57) **Zusammenfassung**

Es wird eine Kaffeemaschine zum Aufbrühen von in einer Kapsel (20) abgepacktem Pulverkaffee vorgeschlagen. Die Kaffeemaschine ist mit einer Brühkammer (5) zur Aufnahme der Kapsel (20), zumindest einem Auffstechmittel (13, 15) zum Aufstechen der Kapsel (20) sowie einer Pumpe (2) zum zwangsweisen Zuführen des Brühwassers versehen. Um zu verhindern, dass der fertige Kaffee an der Oberfläche mit einer Schaumschicht versehen ist, werden Mittel (4, 7) zum Begrenzen der von der Pumpe (2) pro Zeiteinheit in die Brühkammer (5) geförderten Brühwassermenge vorgeschlagen. Die genannten Mittel sollen sicherstellen, dass die Kapsel (20) vom Brühwasser weitgehend drucklos durchströmt wird.

## Beschreibung

Die Erfindung betrifft eine Kaffeemaschine nach dem Oberbegriff des Anspruchs 1.

Kaffeemaschinen der hier zur Rede stehenden Art werden überwiegend im Haushalt eingesetzt. Gegenüber herkömmlichen, mit einem Mahlwerk zum Mahlen der Kaffeebohnen versehenen Kaffeemaschinen liegt ein grundsätzlicher Vorteil der hier zur Rede stehenden Kaffeemaschinän darin, dass durch die Verwendung von Kapseln ein qualitativ hochwertige Kaffeegetränk aufgebrüht werden kann, zumal das Kaffeepulver einen optimalen Mahlgrad aufweist, und luftdicht in den Kapseln verpackt ist. Zudem unterliegen die Kaffeemaschinen einer relativ geringen Verschmutzung durch Kaffeepulver.

Zum Aufbrühen des in der Kapsel aufgenommenen Kaffeepulvers werden sowohl manuelle, halbautomatische wie auch vollautomatische Espressokaffeemaschinen verwendet. Bei den manuellen Kaffeemaschinen wird die Kapsel üblicherweise in einen Kapselhalter eingesetzt, welcher danach manuell an der Kaffeemaschine befestigt wird. Bei den halbautomatischen Kaffeemaschinen wird die Kapsel in einen Kapselträger oder direkt in die Brühkammer eingesetzt, welch letztere danach mittels eines zentralen von Hand zu betätigenden Hebels verschlossen wird. Bei vollautomatischen Kaffeemaschinen hingegen wird die Kapsel einem Magazin entnommen, danach automatisch der Brühkammer zugeführt und nach dem Aufbrühen bzw. Extrahieren ohne Zutun des Benutzers in einen Auffarigbehätter ausgeworfen. Alle drei genannten Arten von Kaffeemaschinen verfügen im allgemeinen über einen mit radiale. Austrittsöffnungen für die Einleitung von Brühwasser versehenen Brühdorn, der zum Durchstossen des Bodens bzw. Deckels der Kapsel ausgebildet ist. Bekannt sind insbesondere auch manuelle Kaffeemaschinen, bei denen der Kapselhalter mit einer Vielzahl von auf einem Ablaufrost angeordneten Erhebungen versehen ist, welche den Deckel der Kapsel aufbrechen, sobald Brühwasser von der den Erhebungen gegenüberliegenden Seite in die Kapsel eingeleitet und letztere durch den hydraulischen Überdruck gegen diese Erhebungen gedrückt wird. Beim nachfolgenden Aufbrühvorgang wird das Brühwasser über den Brühdorn in die Kapsel eingeleitet, so dass es das darin aufgenommene Kaffeepulver unter Überdruck durchströmen und über die Öffnungen im Deckel bzw. Boden austreten kann. Unabhängig davon, ob es sich um eine manuell zu bedienende Kaffeemaschine oder um eine halb- oder vollautomatische Kaffeemaschine handelt, ist diese jedenfalls so ausgelegt und auf die Kapsel abgestimmt, dass der fertige Kaffee an der Oberfläche mit einer Schaumschicht versehen ist, welche u.a. als Quälitätsmerkmal für einen "guten" Kaffee angesehen wird.

Obwohl grosse Anstrengungen unternommen wurden, den fertigen Kaffee an der Oberfläche mit einer haltbaren Schaumschicht zu versehen, kommt in einigen Ländern vermehrt- der-Wunsch auf, mit den hier zur Rede stehenden Kaffeemaschinen auch einen konventionellen Kaffee im Sinne eines Filterkaffees herstellen zu können. Anstelle des Begriffs Filterkaffee wird auch der Begriff schonender Kaffee verwendet.

Aus der US 5,325,765 ist eine Filterpatrone bekannt, bei welcher das Kaffeepulver in einer Filterflüte innerhalb der Patrone aufgenommen ist. Die Aussenhülle der Patrone ist dabei aus einem wasserundurchlässigen Material gefertigt, während die Filtertüte aus einem wasserdurchlässigen Material besteht. Die Filtertüte weist eine sich nach unten konisch verjungende Form auf, so dass im unteren Bereich der Filterpatrone zwischen der Aussenhülle und der Filtertüte eine Kammer gebildet wird. Zum Extrahieren des Kaffeepulvers wird die Patrone beidseitig, d.h. mittel eines oberen und eines unteren Aufstechorgans aufgestochen. Das zum Aufstechen der Unterseite der Patrone vorgesehene Aufstechorgan ist exzentrisch angeordnet, so dass es sich nach dem Aufstechen der Aussenhülle in die Kammer zwischen der Aussenhülle und der Filtertüte erstrecken kann, ohne dass die Filtertüte dabei verletzt wird. Zum Extrahieren des Kaffeepulvers wird der Filterpatrone über das obere Aufstechorgan unter Druck stehendes Brühwasser zugeführt, welches nach dem Extrahieren des Kaffeepulvers durch die Filtertüte hindurchtreten und in die untere Kammer einströmen kann, von wo es über das untere Aufstechorgan in einen Behälter abfliessen kann.

In der US 3,537,384 ist eine Dampf- und Wasseraufbereitungsmaschine beschrieben, welche u.a. mit einer Pumpe und einem nachgeschalteten Durchlauferhitzer versehen ist. Im weiteren ist ein abnehmbarer Filterkopf 10 zur Aufnahme von Kaffeepulver vorgesehen. Die Pumpe ist derart ausgelegt, dass sie pro Umdrehung praktisch ein konstantes Volumen fördert, welches unabhängig ist vom inneren Widerstand des Filterkopfs, so dass die Pumpe pro Umdrehung eine genau vorbestimmte Wassermenge von einer bestimmten Temperatur durch das sich im Filterkopf befindliche Kaffeepulver drückt. Durch Verändern der Pumpenleistung und/oder der Heizleistung des Durchlauferhitzers soll die Temperatur des Brühwassers derart variiert werden können, dass entweder ein herkömmlicher Kaffee oder ein Espresso-Kaffee zubereitet werden kann, da sich durch unterschiedliche Temperaturen unterschiedliche Aromastoffe aus dem Kaffeepulver lösen lassen. So ist namentlich erwähnt, dass für die Zubereitung eines Espresso-Kafees Dampf mit einer Temperatur von ca. 110°C bereit gestellt werden soll, damit insbesondere die im Kaffee mitenthaltenen Bitterstoffe gelöst werden können.

In der Uns 4,583,449 ist schliesslich eine halbautomatische Kaffeemaschine zum wahlweisen Brühen von Normalkaffee oder Espresso offenbart. Diese Kaffeemaschine weist zwei Leitungsstränge auf, welche zwischen einem Frischwasseranschluss und einer Brüheinheit angeordnet sind. Der erste Leitungsstrang ist mit einer Pumpe zum zwangsweisen Zuführen des Brühwassers versehen, während der zweite Leitungsstrang als Bypass ausgebildet ist, welcher den ersten Leitungsstrang umgeht. Zur Zubereitung von Espresso wird das Brühwasser der Brüheinheit über den ersten Leitungsstrang zwangsweise zugeführt, während zur Zubereitung eines Normalkaffees das Brühwasser drucklos über den zweiten Leitungsstrang zugeführt wird..

Die Erfindung zielt darauf ab, eine Kaffeemaschine zum Aufbrühen von in einer Kapsel abgepacktem Pulverkaffee derart weiterzubilden, dass mit ihr nebst konventionellem Espressokaffee auch ein Kaffeegetränk hergestellt werden kann, welches an der Oberfläche keine nennenswerte Schaumschicht aufweist und im Geschmack einem herkömmlichen Filterkaffee bzw. einem schonenden Kaffee entspricht.

Hierzu wird nach der Erfindung eine Kaffeemaschine gemäss dem Anspruch 1 bereitgestellt.

Indem Mittel zum Begrenzen der von der Pumpe pro Zeiteinheit in die Brühkammer geförderten Brühwassermenge vorgesehen sind, derart dass die Kapsel vom Brühwasser weitgehend drucklos durchströmt wird, kann eine Schaumbildung in der Kapsel weitgehend verhindert werden. Vorzugsweise werden sowohl der Deckel wie auch der Boden der Kapsel aufgestochen, bevor mittels der Pumpe Brühwasser in die Kapsel eingeleitet wird.

Bevorzugte Weiterbildungen der Kaffeemaschine sind in den abhängigen Ansprüchen 2 bis 11 definiert.

Ein Ausführungsbeispiel der Erfindung wird nachfolgend anhand von Zeichnungen näher erläutert. In diesen Zeichnungen zeigt:

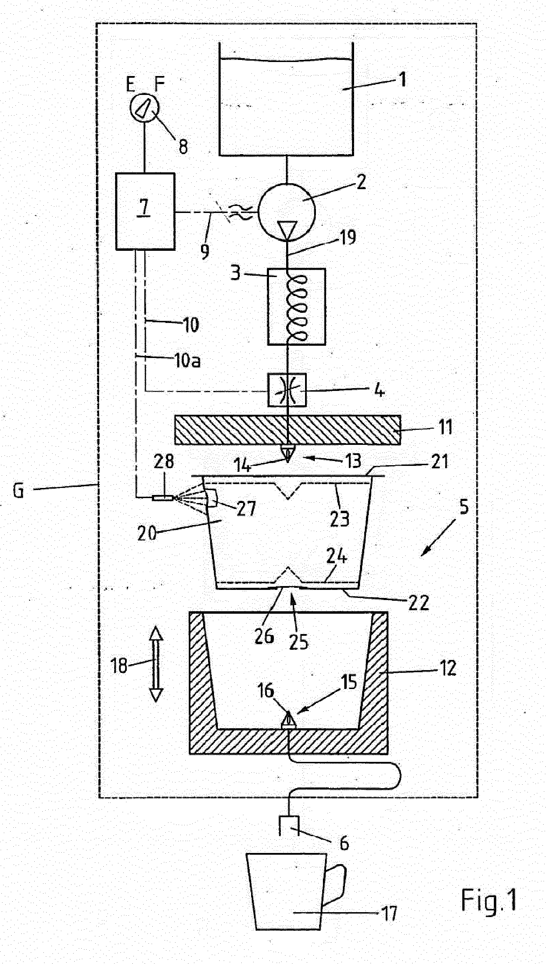

- Fig. 1: eine schematisch dargestellte Kaffeemaschine mit offener Brühkammer;
- Fi. 2: die Kaffeemaschine gemäss Fig. 1 mit geschlossener Brühkammer.

Als wesentliche Elemente der Kaffeemaschine sind ein Frischwassertank 1, eine Pumpe 2, ein Durchlauferhitzer 3, ein Drosselventil 4, eine Brühkammer 5, ein Getränkeauslass 6, eine Steuereinheit 7 sowie ein Wahlschalter 8 schematisch dargestellt. Das Gehäuse G der Kaffeemaschine ist ebenfalls schematisch angedeutet. Unter dem Getränkeauslass 6 ist zudem eine zum Aufnehmen des zubereiteten Kaffeegetränks vorgesehene Kaffeetasse 17 eingezeichnet. Die der Brühkammer 5 zuzuführende, gemahlenen Kaffee enthaltende Kapsel trägt das Bezugszeichen 20. Bei der dargestellten Kapsel ist der Kapselboden 22 mit einer Öffnung 25 versehen ist, welche auf der Innenseite mittels einer Folie 26 verschlossen ist. Da sich eine derart ausgebildete Kapsel insbesondere zum Zubereiten von Filterkaffee eignet, wird eine solche Kapsel nachfolgend jeweils als Filter-Kapsel 20 bezeichnet, während eine herkömmliche, mit einem durchgehenden Boden versehene Kapsel jeweils als Espresso-Kapsel bezeichnet wird.

Die Brühkammer 5 besteht aus einer oberen Verschlussplatte 11 sowie einer unteren Kapselaufnahme 12, deren Innenkontur im wesentlichen mit der Aussenkontur der Filter-Kapsel 20 korrespondiert. Die Verschlussplatte 11 wie auch die Kapselaufnahme 12 sind im Querschnitt dargestellt. Die Kapselaufnahme 12 ist in vertikaler Richtung verschiebbar, wie dies durch den Doppelpfeil 18 angedeutet ist: Auf die Darstellung der Mittel zum Verschieben der Kapselaufnahme 12 wurde ebenso verzichtet wie auf die ggf. vorhandenen Mittel zum Zuführen und Auswerfen der Filter-Kapsel 20. Auf der

Unterseite der Verschlussplatte 11 sowie am Boden der Kapselaufnahme 12 ist je ein Aufstechorgan 13, 15 angeordnet, welches dem Aufstechen des Deckels 21 bzw. Bodens 22 der Filter-Kapsel 20 dient. Das jeweilige Aufstechorgan 13, 15 ist mittig angeordnet und weist einen konisch zulaufenden Vorderteil auf, in den mehrere Schlitze 14, 16 eingelassen sind, über weiche das Brühwasser ausströmen bzw. das aufgebrühte Getränk abfliessen kann. Der Wählschalter 8 dient dem Vorwählen des aufzubereitenden Kaffeegetränks. E steht dabei für Espressokaffee während F stellvertretend für Filterkaffe steht. Der Wählschalter 8 ist elektrisch mit der Steuereinheit 7 verbunden, weich letztere über-eine Leitung 9 mit- der-Pumpe 2 und über eine Leitung 10 mit dem Drosselventil 4 in Verbindung steht. Das Drosselventil 4 ist in einer von der Pumpe 2 zur Verschlussplatte 11 führenden Brühwasserleitung' 19 angeordnet. Im weiteren ist ein Sensor 28 ersichtlich, der über eine Leitung 10a mit der Steuereinheit 7 verbunden ist. Der Sensor 28 dient der Erfassung einer ggf. an der Filter-Kapsel 20 angebrachten Markierung 27, weiche Informationen über die Filter-Kapsel 20 und/oder deren Inhalt enthält. Eine solche Markierung 27 kann optisch, bspw. In Form eines Barcodes auf die Filter-Kapsel 20 aufgedruckt sein. Es sind aber auch andere Markierungen, bspw. in elektronischer Form, möglich. Es versteht sich, dass der Sensor 28 auf die Markierung 27 bzw. umgekehrt abgestimmt ist, um deren Informationsgehalt zu Erfassen und an die Steuereinheit 7 weiterzugeben. Bei der ausschliesslichen Verwendung solcher Kapseln kann ggf. auf den Währschafter 8 verzichtet werden, da die Kapselsorte mittels des Sensors 28 automatisch erkannt und über die Steuereinheit 7 Einfluss auf gewisse Maschinen-Parameter -Pumpenleistungbeim Aufbrühen einer Kapsel genommen wird bzw. genommen werden kann.

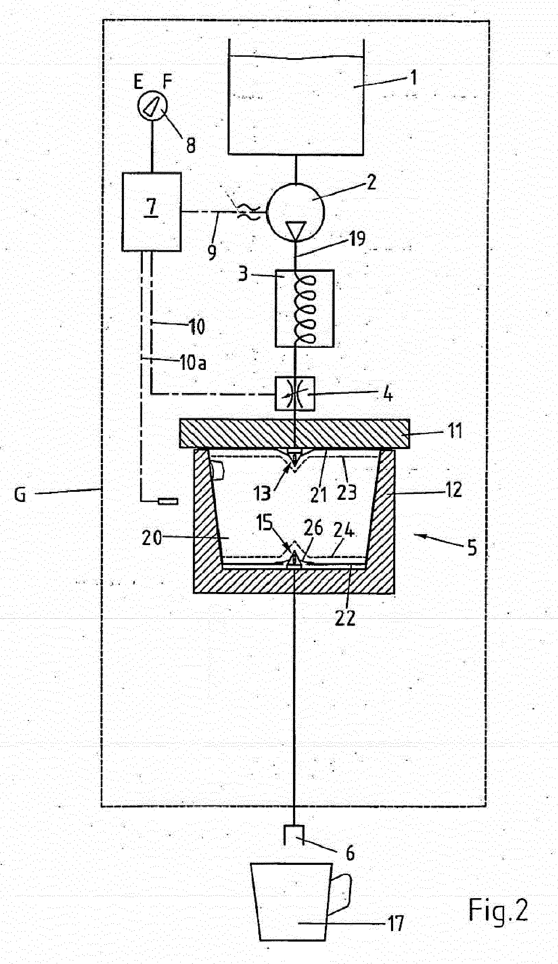

Das Aufbrühen einer Filter-Kapsel 20, welche zum Zubereiten eines schaumlosen Kaffeegetränks vorgesehen ist -Filterkaffee-, geht folgendermassen vonstatten: Der Wählschalter 8 wird manuell in die Stellung F gebracht. Nachdem die Filter-Kapsel 20 in die Kapselaufnahme 12 eingeführt ist, wird die Kapselaufnahme 12 nach oben gegen die Verschlussplatte 11 gefahren. Bei dieser nach oben gerichteten Bewegung wird sowohl der Deckel 21 wie auch der Boden 22 bzw. die Folie 26 der Filter-Kapsel 20 aufgestochen, wie dies in der Fig. 2 dargestellt ist. In der oberen Endstellung verschliesst die Verschlusspfatte 11 zum einen die Brühkammer 5. Zum anderen drückt die Verschlussplatte 11 den Kapseldeckel 21 entlang einer ringförmigen Auflagefläche gegen die Stirnfläche der Kapselaufnahme 12 und dichtet den Kapseloberteil gegenüber dem Kapselboden 22 hydraulisch ab. Nach dem Verschliessen der Brühkammer 5 wird die Pumpe 2 in Betrieb gesetzt. Die pro Zeiteinheit in die Brühkammer 5 geförderten Brühwassermenge wird gegenüber dem Aufbrühen eines herkömmlichen Espressokaffees soweit gedrosselt, dass die Filter-Kapsel' 20 vom Brühwasser weitgehend drucklos durchströmt wird. Die Drosselung kann aufgrund eines abgespeicherten Wertes erfolgen, oder aber der auf der Filter-Kapsel 20 angeordneten Codierung entnommen werden. Diese Drosselung kann entweder dadurch erfolgen, dass die Leistung der Pumpe 2 reduziert oder der Durchflussquerschnitt im Drosselventil 4 vermindert wird. Zum Reduzieren der Leistung der mit Wechselstrom betriebenen Pumpe 2 kann beispielsweise eine Phasenanschnittsteuerung oder eine Wellenpaketsteuerung vorgesehen werden. Alternativ kann auch die Frequenz verändert werden. Es versteht sich, dass in der Praxis vorzugsweise nur die eine der vorgängig angeführten Massnahmen zum Reduzieren der pro Zeiteinheit in die Brühkammer 5 geförderten Brühwassermenge vorgesehen werden muss, indem entweder Mittel zum Verändern der Leistung der Pumpe 2 vorgesehen werden, oder ein Drosselventil 4 zum Verändern des Leitungsquerschnitts vorhanden ist, wobei anstelle der beiden erwähnten Massnahmen natürlich auch noch andere Massnahmen bzw. Mittel vorgesehen werden können.

Jedenfalls sind die genannten Mittel derart ausgebildet, dass die von der Pumpe pro Zeiteinheit in die Brühkammer 5 geförderte Brühwassermenge auch ohne Gegendruck auf maximal 12 l/h, vorzugsweise auf weniger als 8 l/h, begrenzt wird.

Wichtig ist zudem, dass vor dem eigentlichen Aufbrühvorgang sowohl der Deckel 21. wie auch der Boden 22 der Filter-Kapsel 20 mit einer Öffnung versehen sind, damit in der Filter-Kapsel 20 kein hydraulischer Druckaufbau, der zur Erzeugung von Schaum führen könnte, stattfindet. Wie aus der Zeichnung, im weiteren ersichtlich ist, ist die Filter-Kapsel 20 mit einem oberen und einem unteren Filterelement 23, 24 versehen. Solche Filterelemente 23, 24 begünstigen eine gleichmässige Durchströmung der Filter-Kapsel 20 und verhindern ein Austreten des darin aufgenommenen Kaffeepulvers über die jeweilige Aufstechöffnung, zumal die Filterelemente im Bereich des zu erwartenden Einstichs eine zum Kapselinnern gerichtete Vertiefung aufweisen, in welche sich das jeweilige Aufstechorgan 13, 15 nach dem Durchstechen des Bodens 22 bzw. Deckels 21 erstrecken kann. Um sicherzustellen, dass der Boden 22 beim Verschliessen der Brühkammer 5 sicher aufgebrochen bzw. aufgestochen wird, wird eine Folie 26 eingesetzt, welche in Relation zum Material des becherartigen Kapsetunterteils, eine relativ geringe Dehnbarkeit und Reissfestigkeit aufweist, so dass sie beim Verschliessen der Brühkammer 5 unter der Krafteinwirkung des am Boden der Kapselaufnahme 12 angeordneten Aufstechorgans 15 sicher reisst.

Zum Aufbrühen eines konventionellen Espressokaffees wird der Wählschalter 8 manuell in die Stellung E gebracht. In diesem Modus wird eine herkömmliche Espresso-Kapsel vom Brühwasser unter Überdruck durchströmt. Unter Espressokaffee wird im vorliegenden Fall ein Kaffee verstanden, der an der Oberfläche mit einer Schaumschicht versehen ist und zwar unabhängig von der Menge an Brühwasser, die zum Aufbrühen des entsprechenden Kaffeegetränks verwendet wird. Vorzugsweise werden zum Aufbrühen von Filterkaffee andere Kapseln verwendet als zum Aufbrühen von Espressokaffee, indem nebst der unterschiedlichen Gestaltung des Bodens beispielsweise auch die Kaffeemischung, die Pulvermenge und/oder der Mahlgrad des Kaffeepulvers unterschiedlich gewählt wird/werden. Zudem werden bei einer Filter-Kapsel die in die beiden Filterelemente 23, 24 eingelassenen Öffnungen vergrössert und/oder deren Anzahl erhöht, so dass dem Brühwasser auch durch die beiden Filterelemente 23, 24 kein nennenswerter hydraulischer Widerstand entgegengesetzt wird.

Alternativ zum gezeigten Ausführungsbeispiel könnten an der Kaffeemaschine noch weitergehende Massnahmen getroffen werden, indem die Kapsel bzw. deren Boden, je nachdem welche Art von Kaffee aufgebrüht werden soll, zu einem unterschiedlichen Zeitpunkt aufgestochen wird. Soll beispielsweise ein Espressokaffee aufgebrüht werden, so wird der Boden der entsprechenden Espresso-Kapsel erst aufgestochen, nachdem in der Kapsel bereits ein hydraulischer Überdruck durch das Brühwasser aufgebaut ist, da diese Massnahme bekanntlich die Schaumbildung begünstigt. Alternativ dazu kann bei einer Espresso-Kapsel deren Kapselboden durch das Aufstechorgan in einer ersten Phase auch nur soweit aufgestochen werden, bis die Aufstechspitze des Aufstechorgans den Kapselboden zwar durchdringt, jedoch nur soweit, dass die Schlitze 16 des Aufstechorgans 15 noch nicht mit dem Innenraum der Espresso-Kapsel in Verbindung gebracht werden. Auf diese Weise kann am Anfang der Aufbrühphase in der Espresso-Kapsel ebenfalls ein hydraulischer Überdruck durch das Brühwasser aufgebaut werden.

Andererseits wird zum Aufbrühen einer Filter-Kapsel sowohl der Deckel wie auch der Boden der Kapsel schon vor dem eigentlichen Aufbrühvorgang aufgestochen, damit, wie vorgängig bereits erwähnt, kein hydraulischer, die Schaumbildung begünstigender Druckaufbau in der Filter-Kapsel stattfindet.

Eine derartige Kaffeemaschine ist auch unter dem Begriff Espressomaschine bekannt, da sie sich neben der Zubereitung von Filterkaffee bzw. schonendem Kaffee insbesondere auch zur Zubereitung von Espresso eignet. Die Kaffeemaschine kann sowohl als manuell zu bedienendes Gerät mit einem von Hand an der Maschine zu befestigenden Kapselhafter ausgebildet sein; wie auch als Halb- oder Vollautomat ausgebildet sein.

Zum Umsetzen der vorgängig geschilderten Massnahmen könnte beispielsweise das am Boden der Brühkammer angeordnete Aufstechorgan vertikal verschiebbar ausgebildet werden. Die Verschiebung des Aufstechorgans könnte beispielsweise elektromotorisch oder elektromagnetisch erfolgen, wobei dessen Ansteuerung ebenfalls mittels der Steuereinheit 7 vorgenommen werden könnte.

## Patentansprüche

1. Kaffeemaschine zum Aufbrühen von in einer Kapsel (20) abgepacktem Pulverkaffee, mit einer Brühkammer (5) zur Aufnahme der Kapsel (20), zumindest einem Aufstechmittel (13,15) zum Aufstechen der Kapsel (10) sowie einer Pumpe (2) zum zwangsweisen Zuführen des Brühwassers, **dadurch gekennzeichnet, dass** Mittel (4, 7) zum Begrenzen der von der Pumpe (2) pro Zeiteinheit in die Brühkammer (5) geförderten Brühwassermenge vorgesehen sind, derart dass die Kapsel (20) vom Brühwasser weitgehend drucklos durchströmt wird.

2. Kaffeemaschine nach Anspruch 1, **dadurch gekennzeichnet dass** die pro Zeiteinheit in die Brühkammer (5) geförderte Brühwassermenge auf maximal 12 l/h begrenzt wird.

3. Kaffeemaschine nach Anspruch 1 oder 2, **dadurch gekennzeichnet, dass** die Kaffeemaschine mit zumindest zwei Aufstechorganen (13, 15) zum Aufstechen des Kapselbodens (22) und des Kapseldeckels (21) versehen ist, wobei sowohl der Kapselboden (22) wie auch der Kapseldeckel (21) aufgestochen werden, bevor mittels der Pumpe (2) Brühwasser in die Kapsel (20) eingeleitet wird.

4. Kaffeemaschine nach Anspruch 3, **dadurch gekennzeichnet, dass** die Brühkammer (5) durch eine Kapselaufnahme (12) und ein Verschlussorgan (11) gebildet wird, wobei sowohl an der Kapselaufnahme (12) wie auch am Verschlussorgan (11) zumindest je ein Aufstechorgan (13, 15) angeordnet ist und zum Verschliessen der Brühkammer (5) eine Relativbewegung zwischen der Kapselaufnahme (12) und dem Verschlussorgan (11) erzeugt, wird, und wobei die Kapsel (20) beim Verschliessen der Brühkammer (5) durch die beiden Aufstechorgane (13,15) beidseitig aufgestochen wird.

5. Kaffeemaschine nach Anspruch 4, **dadurch gekennzeichnet dass** das Verschlussorgan (11) und/oder die Kapselaufnahme (12) mit einem mittig angeordneten Aufstechorgan (13, 15) versehen ist/sind.

6. Kaffeemaschine nach einem der vorhergehenden Ansprüche, **dadurch gekennzeichnet, daas** Mittel (7) zum Begrenzen der Leistung der Pumpe (2) vorgesehen sind.

7. Kaffeemaschine nach Anspruch 6, **dadurch gekennzeichnet, dass** die Pumpe (2) mit Wechselstrom betrieben ist und eine Phasenanschnittsteuerung, eine Wellenpaketsteuerung oder eine Steuerung zum Ändern der Frequenz vorgesehen ist, mittels welcher die von der Pumpe (2) pro Zeiteinheit geförderte Brühwassermenge veränderbar ist.

8. Kaffeemaschine nach einem der Ansprüche 1 bis 5, **dadurch gekennzeichnet, dass** in der von der Pumpe (2) zur Brühkammer (5) führenden Brühwasserleitung (19) ein Drosselventil (4) zum Verändern des Durchflussquerschnitts angeordnet ist.

9. Kaffeemaschine nach einem der vorhergehenden Ansprüche, **dadurch gekennzeichnet, dass** ein manuell betätigbarer Wählschalter (8) vorgesehen Ist, der mit einer Steuereinheit (7) verbunden ist, wobei die Steuereinheit (7), zum Begrenzen der von der Pumpe (2) pro Zeiteinheit in die Brühkammer (5) geförderten Brühwassermenge, mit der Pumpe (2) und/oder dem Drosselventil (4) verbunden ist.

10. Kaffeemaschine nach Anspruch 4 oder 5, **dadurch gekennzeichnet dass** das Verschlussorgan (11) den Kapseldeckel (21) entlang einer ringförmigen Auflagefläche gegen die Stirnfläche der Kapselaufnahme (12) zu drücken bestimmt ist.

11. Kaffeemaschine nach einem der vorhergehenden Ansprüche, **dadurch gekennzeichnet, dass** die Kaffeemaschine mit zumindest einem Sensor (28) zur Decodierung einer auf der Kapsel (20) angebrachten Markierung (27) versehen ist, wobei der Sensor (28) mit der Steuereinheit (7) verbunden ist, weiche letztere die pro Zeiteinheit von der Pumpe (2) in die Brühkammer (5) geförderte Brühwassermenge in Abhängigkeit des Informationsgehalts der Markierung verändert.

12. Kapsel (20) zur Verwendung in einer nach einem der vorhergehenden Ansprüche ausgebildeten Kaffeemaschine, **dadurch gekennzeichnet, dass** der Kapselboden (22) mit einer Öffnung (25) versehen ist, welche auf der Innenseite mittels einer Folie (26) verschlossen ist

13. Kapsel (20) nach Anspruch 12, **dadurch gekennzeichnet, dass** die Kapsel (20) einen becherartigen Kapseluntertell aufweist, dessen Unterseite den Kapselboden (22) bildet, wobei die Folie (26), welche die im Kapselboden (22) angeordnete Öffnung (25) verschliesst, in Relation zum becherartigen Kapselunterteil sowohl eine geringere Dehnbarkeit wie auch eine geringere Reissfestigkeit aufweist, so dass die Folie (26) beim Verschliessen der Brühkammer (5) unter der Krafteinwirkung des Aufstechmittels (15) sicher reisst.
